# EUROPEAN PATENT APPLICATION

(11) **EP 3 916 850 A1**
(43) Date of publication of application: **01.12.2021**
(21) Application number: 19955004.7
(22) Date of filing: 03.12.2019
(51) Int. Cl.: H01M 4/133, H01M 10/0525

(54) **SECONDARY BATTERY, DEVICE, ARTIFICIAL GRAPHITE, AND PREPARATION METHOD**

(71) Applicant: Contemporary Amperex Technology Co., Limited, Fujian PRC 352100 (CN)
(72) Inventor: LI, Yuanyuan, Ningde, Fujian 352100 (CN); MA, Jianjun, Ningde, Fujian 352100 (CN); SHEN, Rui, Ningde, Fujian 352100 (CN); HE, Libing, Ningde, Fujian 352100 (CN)
(74) Representative: Boult Wade Tennant LLP
(86) International application number: PCT/CN2019/122649
(87) International publication number: WO 2021/108981

(57) **Abstract**

The present application discloses a secondary battery, an apparatus including the secondary battery, artificial graphite and a method for the preparation thereof. The secondary battery includes a negative electrode plate, the negative electrode plate including a negative active material, wherein the negative active material includes an artificial graphite having a numerical particle size Dₙ10 of at least 1µm; the artificial graphite has a graphitization degree of 90% to 95%;the negative electrode plate has a compaction density of 1.55g/cm³ to 1.75g/cm³, and the negative electrode plate has an OI value of at most 15, wherein the OI value of the negative electrode plate represents a ratio C₀₀₄/C₁₁₀, in which C₀₀₄ is the peak area of the diffraction peak of 004 crystal plane of the artificial graphite in the negative electrode plate and C₁₁₀ is the peak area of the diffraction peak of 110 crystal plane of the artificial graphite in the negative electrode plate. The artificial graphite provided by the present application has a higher gram capacity and a lower cyclic expansion. The secondary battery provided by the present application has low cyclic expansion and high energy density.

## Description

### TECHNICAL FIELD

The present application belongs to the technical field of secondary batteries, and specifically relates to a secondary battery, an apparatus, artificial graphite and a method for the preparation thereof.

### BACKGROUND

Secondary batteries are widely used due to their outstanding features such as no pollution, and long service life.

However, the volume of the secondary battery will expand during the cycle, which causes the internal stress of the battery to increase, thus affecting the service life and safety performance of the battery. For example, with the rapid popularity of new energy vehicles, the market has increasingly higher requirements for the service life and safety performance of power-type secondary batteries. In order to enhance the market competitiveness of new energy vehicles, it is indeed necessary to provide a new technology that can reduce the volume expansion of secondary batteries.

### SUMMARY

The present application provides a secondary battery that can have low cyclic expansion, an apparatus including the secondary battery, artificial graphite that can reduce the volume expansion of the secondary battery during the cycle, and a method for preparation thereof.

In order to achieve the above object, a first aspect of the present application provides a secondary battery including a negative electrode plate, the negative electrode plate including a negative active material, the negative active material including an artificial graphite, wherein
the artificial graphite has a numerical particle size Dₙ10 of ≥ 1µm;
the artificial graphite has a graphitization degree of from 90% to 95%;
the negative electrode plate has a compaction density of from 1.55g/cm³ to 1.75g/cm³, and the negative electrode plate has an OI value of ≤15, wherein the OI value of the negative electrode plate represents a ratio C₀₀₄/C₁₁₀, in which C₀₀₄ is the peak area of the diffraction peak of 004 crystal plane of the artificial graphite in the negative electrode plate and C₁₁₀ is the peak area of the diffraction peak of 110 crystal plane of the artificial graphite in the negative electrode plate. The peak area of the diffraction peak can be obtained by X-ray diffraction pattern test.

A second aspect of the present application provides an apparatus including the secondary battery according to the first aspect of the present application.

The third aspect of the present application provides an artificial graphite, wherein the artificial graphite has a numerical particle size Dₙ10 of ≥ 1µm, and the artificial graphite has a graphitization degree of from 90% to 95%; when the artificial graphite is used in a negative electrode with a compaction density of from 1.55g/cm³ to 1.75g/cm³, the ratio of a peak area of the 004 crystal plane to a peak area of the 110 crystal plane is ≤15.

The fourth aspect of the present application provides a method for preparing an artificial graphite, including the following steps:
(1) crushing green coke materials and classifying them;
(2) shaping the product obtained in step (1) and then removing fine powder;
(3) granulating the product obtained in step (2), wherein a binder is added during the granulation process in an amount of not exceeding 5% of the total weight of the green coke materials;
(4) subjecting the product obtained in step (3) to a graphitization treatment at a temperature of from 2800°C to 3200°C to obtain the artificial graphite;
wherein the artificial graphite has a number average particle size Dₙ10 of ≥ 1µm, and the artificial graphite has a graphitization degree of 90% to 95%; when the artificial graphite is used in a negative electrode having a compaction density of from 1.55g/cm³ to 1.75g/cm³, the ratio of a peak area of the 004 crystal plane to a peak area of the 110 crystal plane of the artificial graphite is ≤15.

A fifth aspect of the present application provides a method for preparing a secondary battery, including the step of using the artificial graphite described in the third aspect of the present application to prepare a negative electrode plate.

In the secondary battery provided in the present application, the negative active material includes an artificial graphite having a specific range of Dₙ10 and graphitization degree, and when the compaction density of the negative electrode plate is from 1.55g/cm³ to 1.75g/cm³, the ratio of the peak area of 004 crystal plane to the peak area of 110 crystal plane of the artificial graphite is within a specific range. Under the combined effect of the above conditions, the secondary battery has both higher energy density and smaller cyclic expansion, so that the battery life and safety of the secondary battery are improved. Since the apparatus of the present application includes the secondary battery of the present application, it has at least the same advantages as the secondary battery.

### DESCRIPTION OF THE DRAWINGS

In order to explain the technical solutions of the embodiments of the present application more clearly, the following will briefly introduce the drawings that need to be used in the embodiments of the present application. Obviously, the drawings described below are only some embodiments of the present application. A person of ordinary skill in the art can obtain other drawings based on the drawings without creative work.
Fig. 1 is a schematic diagram of a secondary battery provided by an embodiment of the present application.
Fig. 2 is a schematic diagram of a battery module provided by an embodiment of the present application.
Fig. 3 is a schematic diagram of a battery pack provided by an embodiment of the present application.
Fig. 4 is an exploded view of Fig. 3.
Fig. 5 is a schematic diagram of an apparatus provided by an embodiment of the present application.
Figs 6a-6c are SEM (scanning electron microscope) images of artificial graphite provided by an embodiment of the present application.

Among them, the reference signs are explained as follows:

- 1.: Battery pack;
- 2.: Upper case body;
- 3.: Lower case body;
- 4.: Battery module;
- 5.: Secondary battery.

### DETAILED DESCRIPTION

In order to make the object, technical solution, and technical effects of the present application apparent, the following further describes the present application in detail with reference to the embodiments. It should be understood that the embodiments described in the present description are only for explaining the present application, and are not intended to limit the application.

For the sake of brevity, only certain numerical ranges are explicitly disclosed herein. However, any lower limit may be combined with any upper limit to form a range that is not explicitly described; and any lower limit may be combined with other lower limits to form an unspecified range, and any upper limit may be combined with any other upper limit to form an unspecified range. Further, although not explicitly specified, each point or single value between the endpoints of the range is included in the range. Thus, each point or single value can be combined with any other point or single value or combined with other lower or upper limits to form a range that is not explicitly specified.

In the description herein, it should be noted that, unless otherwise stated, the recitation of numerical ranges by "no less than" and "no more than" include all numbers within that range including the endpoints. As used herein, "a", "an", "the", "at least one", and "one or more" are used interchangeably, unless indicated otherwise and the recitation of "more" in the phrase "one or more" includes two or more.

The above summary of the present application is not intended to describe each disclosed embodiment or every implementation in this application. The following description illustrates exemplary embodiments more specifically. In many places throughout the application, guidance is provided through a series of examples, which can be used in various combinations. In each instance, the enumeration is only a representative group and should not be interpreted as exhaustive.

As an economical, practical, clean and easily controllable and convertible energy form, electric energy is increasingly used in various apparatus. Secondary batteries have become the preferred power source for apparatus due to their advantages of high energy density, portability, no memory effect, and environmental friendliness.

### [Secondary battery]

Thus, a first aspect of the present application provides a secondary battery.

The secondary battery comprises a positive electrode plate, a negative electrode plate, and an electrolyte. During the charging and discharging process of the battery, active ions are inserted and extracted back and forth between the positive electrode plate and the negative electrode plate. The electrolyte conducts ions between the positive electrode plate and the negative electrode plate.

### [Negative electrode plate]

The negative electrode plate comprises a negative electrode current collector and a negative electrode film disposed on at least one surface of the negative electrode current collector. As an example, the negative electrode current collector has two opposite surfaces in its own thickness direction, and the negative electrode film is laminated on either or both of the two opposite surfaces of the negative electrode current collector.

The negative electrode current collector can be made of materials with good electrical conductivity and mechanical strength to play the role of conduction and current collection. In some embodiments, a copper foil may be used as the negative electrode current collector.

The negative electrode film comprises a negative active material, and the negative active material comprises artificial graphite.

Based on a lot of research, the inventors of the present application provide an artificial graphite having high gram capacity and low expansion performance at the same time. In particular, the artificial graphite has a number average particle size Dₙ10 of at least 1µm, and the artificial graphite has a graphitization degree of from 90% to 95%; when the artificial graphite is used in a negative electrode having a compaction density of from 1.55g/cm³ to 1.75g/cm³, the ratio of a peak area of the 004 crystal plane to a peak area of the 110 crystal plane of the artificial graphite is ≤15. The artificial graphite of the present application can effectively reduce the volume expansion of the negative electrode plate during the cycle, and at the same time, it has a higher gram capacity, which is beneficial to increasing the energy density of the secondary battery.

The artificial graphite provided by the embodiments of the present application has a specific range of Dₙ10 and graphitization degree, thereby enabling it to have a higher gram capacity. When the compaction density of the negative electrode plate is in the range of from 1.55g/cm³ to 1.75g/cm³, the orientation index OI value of the artificial graphite is relatively low. During lithium intercalation process the expansion of the artificial graphite having a lower orientation degree can be distributed in all directions, thereby reducing the volume expansion of the negative electrode plate and the secondary battery during the cycle.

Using the artificial graphite of the present application, under the combined effect of the above conditions, the secondary battery can have both higher energy density and lower cyclic expansion.

The volume increase of the secondary battery during the cycle is smaller, which is conducive to making it have a higher energy density. In particular, a secondary battery with a low cyclic expansion can maintain an internal structure suitable for electrolyte infiltration during the cycle, so that the electrolyte is fully infiltrated in the battery core, and thus can improve the cycle life of the secondary battery. The lower cyclic expansion can also reduce the internal stress of the battery core of the secondary battery, reduce the deformation of the battery core under the action of the internal stress, and effectively improve the safety performance of the secondary battery. The safety performance of the apparatus using the secondary battery can therefore be improved.

A higher degree of graphitization enables the artificial graphite to obtain a higher gram capacity. In particular, by further making the Dₙ10 of the artificial graphite within a specific range, the gram capacity of the artificial graphite can be further increased. Therefore, the artificial graphite of the present application has a relatively high gram capacity, which can increase the energy density of the battery, thereby helping to improve the battery life of the apparatus. In addition, the use of the artificial graphite of the present application can enable the negative electrode plate to obtain a higher compaction density, which can further increase the energy density of the secondary battery.

When the compaction density of the negative electrode plate is from 1.55 g/cm³ to 1.75 g/cm³, the OI value of the negative electrode plate may be ≤15, ≤13, ≤12, or ≤ 11.5. When the OI value of the negative electrode plate is smaller, the direction selectivity of the artificial graphite during the lithium intercalation process is smaller, and the lithium intercalation-induced expansion can be distributed in all directions, thereby reducing the cyclic expansion of the electrode plate and the battery. Further, when the compaction density of the negative electrode plate is from 1.55g/cm³ to 1.75g/cm³, the OI value of the negative electrode plate may be ≥6, ≥7, ≥8, or ≥8.5. In such case, the artificial graphite in the negative electrode plate and the negative electrode current collector can have a higher bonding force, thereby further reducing the cyclic expansion of the electrode plate and the battery.

Preferably, when the compaction density of the negative electrode plate is from 1.55 g/cm³ to 1.75 g/cm³, the OI value of the negative electrode plate is from 8 to 12.

In some embodiments, the compaction density of the negative electrode plate is from 1.6 g/cm³ to 1.7 g/cm³, preferably from 1.62 g/cm³ to 1.68 g/cm³. In this way, the negative electrode plate can have a high compaction density and at the same time have a porosity suitable for full infiltration of the electrolyte. Therefore, the capacity of the battery can be used more effectively, and the battery can obtain better kinetic performance.

The inventors have found that a suitable graphitization degree G can make the artificial graphite have a higher gram capacity and a higher phase structural stability at the same time. In some embodiments, the graphitization degree G of the artificial graphite is from 90% to 95%, preferably from 92% to 95%, more preferably from 92% to 94%.

The graphitization degree of artificial graphite within the above range can make the artificial graphite have a higher powder compaction density and gram capacity. In particular, the graphitization degree G within the above range can also prevent the artificial graphite from co-intercalation of a solvent during the battery cycle, and the graphite layer is not easily peeled off, thereby reducing the cyclic expansion of the electrode plate and the battery. At the same time, the structural stability of the artificial graphite is higher, and it is not easy to disintegrate during the rolling process of preparing the negative electrode plate. Therefore, the cohesion between the particles in the electrode plate is relatively high, which can reduce the expansion of the electrode plate and thus the battery during cycle process.

In some preferred embodiments, the numerical particle size Dₙ10 of the artificial graphite may be ≥1µm, ≥1.2µm, ≥1.3µm, or ≥1.5µm. The artificial graphite having a suitable Dₙ10 can make it have a higher gram capacity. In addition, the Dₙ10 of the artificial graphite makes its active specific surface area smaller, so there are fewer side reactions between the artificial graphite and the electrolyte, and the cyclic expansion of the battery can be further reduced.

Further, the Dₙ10 of the artificial graphite may be ≤4µm, ≤3µm, or ≤2µm. Preferably, the Dₙ10 of the artificial graphite is from 1.2µm to 3µm, more preferably from 1.3µm to 2µm. In the artificial graphite containing an appropriate amount of smaller particles, the smaller particles can be filled in the pores between the larger particles, so that the artificial graphite can have a higher tap density and powder compaction density. Thus, the negative electrode plate using such artificial graphite can obtain a higher compaction density, so that the energy density of the battery can be further improved.

In some embodiments, the particle size Dᵥ50 of the artificial graphite may be from 15µm to 22µm. Preferably, the Dᵥ50 of the artificial graphite may be from 15µm to 20µm, preferably from 15µm to 18µm.

A suitable Dᵥ50 makes the artificial graphite have higher performance for transporting active ion and electron, and at the same time, it can also reduce the side reaction of the electrolyte in the negative electrode. In addition, artificial graphite with a suitable Dᵥ50 is also beneficial to increasing its own powder compaction density.

In some embodiments, the particle size Dᵥ10 of the artificial graphite is ≥6µm. For example, the Dᵥ10 of the artificial graphite may be ≥ 6µm, ≥6.5µm, ≥7µm, or ≥ 7.5µm. The artificial graphite having a smaller active specific surface area can further reduce side reactions in the secondary battery. Further, the Dᵥ10 of the artificial graphite may be ≤11µm, ≤10.5µm, ≤10µm, ≤9.5µm, or ≤9µm, which is conducive to making the electrode plate obtain a higher compaction density. Preferably, Dᵥ10 satisfies 6.5µm≤ Dᵥ10≤10.5µm.

The particle size span of artificial graphite is defined as Span=(Dᵥ90―Dᵥ10)/Dᵥ50. In some embodiments, the particle size span of the artificial graphite may be from 1.1 to 1.8, preferably from 1.2 to 1.5.

Under the condition that the particle size span of the artificial graphite is appropriate, the artificial graphite contains an appropriate amount of larger particles and smaller particles, which can improve the stacking performance between the artificial graphite particles, and the negative electrode plate adopting such artificial graphite has an appropriate porosity. At the same time, the artificial graphite can also have a proper active specific surface area, so that it has both higher electrochemical reaction activity and higher surface stability. Therefore, there are fewer side reactions of the electrolyte on the surface of the artificial graphite, which can greatly reduce the consumption of the electrolyte caused by side reactions and the increase in the thickness of the SEI (solid electrolyte interphase) film on the surface of the material. In this way, the low-cyclic-expansion performance of the battery is further improved.

In addition, the appropriate particle size span (Span) can also make the artificial graphite have a higher tap density and powder compaction density. The compaction density of the negative electrode plate using the artificial graphite is therefore relatively high, which can increase the energy density of the battery.

In some embodiments, the specific surface area SSA of the artificial graphite may be from 0.8m²/g to 2.0m²/g. For example, the specific surface area SSA of the artificial graphite may be 0.8m²/g or more, 1m²/g or more, or 1.2m²/g or more; and the specific surface area SSA of the artificial graphite may be 2.0m²/g or less, 1.8m²/g or less, 1.5m² /g or less, or 1.3m²/g or less. Preferably, the specific surface area SSA of the artificial graphite is from 1.0 m²/g to 1.5 m²/g.

The artificial graphite having an appropriate specific surface area can reduce the side reactions of the electrolyte on its surface and reduce the gas production, thereby reducing the volume expansion of the secondary battery during the cycle. At the same time, the artificial graphite can have higher electrochemical reaction activity, so that the secondary battery has higher kinetic performance, which is conducive to meeting the power requirements of the apparatus. In addition, a proper specific surface area can also make the artificial graphite and the binder have a strong bonding force, which can improve the cohesion and bonding force of the electrode plate, thereby further reducing the cyclic expansion of the secondary battery.

In some preferred embodiments, the artificial graphite also optionally satisfies that the Dᵥ50 of the artificial graphite is from 15µm to 22µm, Dᵥ10 is ≥6µm, (Dᵥ90-Dᵥ10)/Dᵥ50 is from 1.1 to 1.8, and SSA is from 0.8m²/g to 2.0m²/g. The artificial graphite has better particle matching, and can obtain a higher stacking density, thereby increasing the powder compaction density of the artificial graphite, which is beneficial to increasing the energy density of the battery. At the same time, the specific surface area of the artificial graphite is conducive to meeting its electrochemical reaction activity requirements, and the artificial graphite has a better matching effect between particles, which can enable the negative electrode plate to have higher liquid phase ion transport performance and solid phase ion transport performance, thereby ensuring that the battery has good kinetic performance.

In some embodiments, the artificial graphite comprises secondary particles formed by aggregation of primary particles. This can make the artificial graphite itself have a lower degree of orientation, which can reduce the cyclic expansion of the battery.

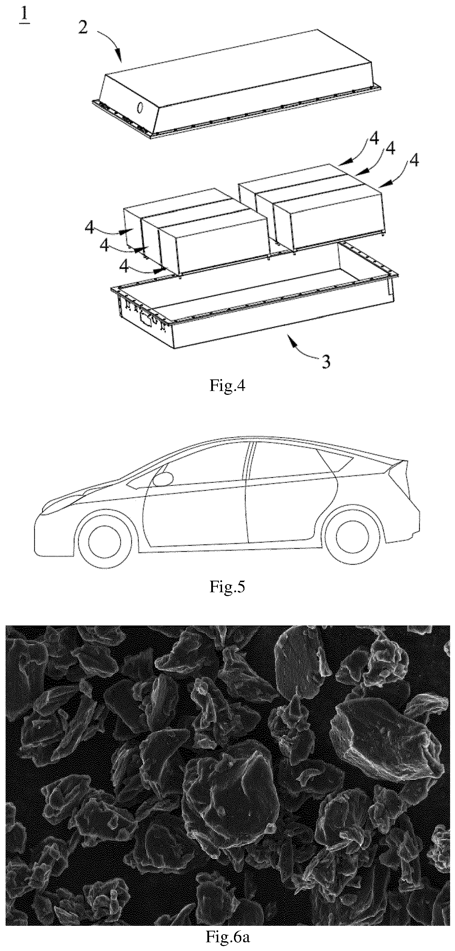

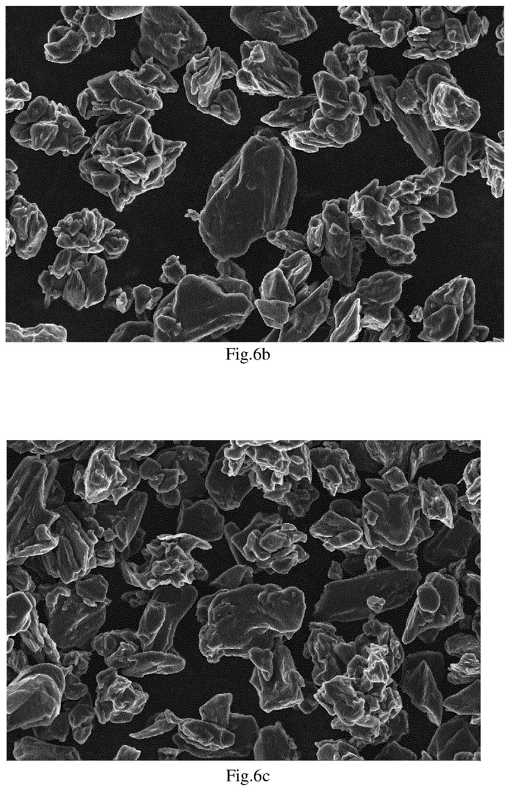

In some embodiments, the morphology of the secondary particles may be one or more of a block shape, a spherical shape, and a spheroid shape. The spheroid shape is, for example, ellipsoid, ellipsoidal, or substantially spherical structure. Figs 6a-6c are SEM images showing morphology of artificial graphite as an example.

In some preferred embodiments, the proportion of the number of secondary particles in the artificial graphite is ≥60%, ≥65%, ≥70%, ≥75%, or ≥80%. The OI value of the negative electrode plate using such artificial graphite is small, so the cyclic expansion of the negative electrode plate and the battery can be reduced. Further, the proportion of the number of the secondary particles in the artificial graphite is ≤95%, ≤ 90%, or ≤85%. The artificial graphite contains a proper amount of primary particles, which can increase the tap density and powder compaction density. Preferably, the proportion of the number of secondary particles in the artificial graphite is from 70% to 90%.

Peak D and Peak G are Raman characteristic peaks of graphite materials. The Peak D and Peak G of the artificial graphite can be measured by laser Raman spectroscopy, such as Advantage 785TM Raman spectrometer. In the Raman spectrum of the artificial graphite measured by a Raman spectrometer, the peak D is at the position of from 1300 cm⁻¹ to 1400 cm⁻¹, and the peak G is at the position of from 1580 cm⁻¹ to 1620 cm⁻¹. I_{D}/I_{G} represents the ratio of the peak intensity I_{D} of the peak D to the peak intensity I_{G} of the peak G.

In some preferred embodiments, the I_{D}/I_{G} of the artificial graphite is ≤0.25. For example, the I_{D}/I_{G} of the artificial graphite may be ≤0.23, ≤0.2, ≤0.18, ≤0.16, or ≤ 0.15. The artificial graphite of the present application has a small I_{D}/I_{G}, and it can be considered that its surface stability is high, which can further reduce the volume expansion of the secondary battery during the cycle. Further, the I_{D}/I_{G} of the artificial graphite may be ≥0.05, ≥0.08, ≥0.1, or ≥0.12. This enables artificial graphite to have higher electrochemical reaction activity and meet the requirements on the kinetic properties of the battery. Preferably, I_{D}/I_{G} satisfies 0.1≤I_{D}/I_{G}≤0.2.

In some embodiments, the tap density of artificial graphite may be from 0.85g/cm³ to 1.35g/cm³, preferably from 0.95g/cm³ to 1.15g/cm³.

In some embodiments, the powder compaction density of artificial graphite under a pressure of 2000 kg is from 1.65g/cm³ to 1.85g/cm³, preferably from 1.68g/cm³ to 1.83g/cm³.

The artificial graphite has a higher powder compaction density under a pressure of 2000kg, and the negative electrode plate using the artificial graphite can have a higher compaction density, so that the battery has a higher energy density.

In some preferred embodiments, the gram capacity of the electrode plate of the present application is from 350 mAh/g to 359 mAh/g, for example, from 350 mAh/g to 357 mAh/g, and for example, from 352 mAh/g to 355 mAh/g. The artificial graphite of the present application has both high gram capacity and high internal structural stability. Thus it is not easy to disintegrate during the rolling process for preparing the negative electrode plate, so that the cohesion between the particles in the electrode plate is relatively high, thereby reducing the cyclic expansion of the electrode plates and the battery.

In some embodiments, the negative active material optionally further comprises other active materials that can be used in the negative electrode of a secondary battery. A example of other negative active materials may be one or more of other graphite materials (such as other artificial graphite and natural graphite), mesophase carbon microspheres (MCMB in short), hard carbon, soft carbon, silicon-based materials, and tin-based materials.

In some embodiments, the negative electrode film further comprises a binder. As an example, the binder may be one or more selected from polyacrylic acid (PAA), sodium polyacrylate (PAAS), polyacrylamide (PAM), polyvinyl alcohol (PVA), styrene butadiene rubber (SBR), sodium alginate (SA), polymethacrylic acid (PMAA), and carboxymethyl chitosan (CMCS).

In some embodiments, the negative electrode film optionally further comprises a thickener. As an example, the thickener may be sodium carboxymethyl cellulose (CMC-Na).

In some embodiments, the negative electrode film optionally further comprises a conductive agent. As an example, the conductive agent used for the negative electrode film may be one or more selected from graphite, superconducting carbon, acetylene black, carbon black, Ketjen black, carbon dots, carbon nanotubes, graphene, and carbon nanofibers.

In some embodiments, the areal density of the negative electrode plate may be from 7.5 mg/cm² to 14.0 mg/cm², preferably from 8.5 mg/cm² to 13.0 mg/cm² more preferably from 9.5 mg/cm² to 12.0 mg/cm². The areal density of the negative electrode plate refers to the areal density of the negative electrode film on one side of the negative electrode current collector. The areal density of the negative electrode plate is in the proper range, which can make it have a higher capacity, and have a higher performance for transporting active ion and electron at the same time.

In the present application, the Dₙ10, Dᵥ10, Dᵥ50, and Dᵥ90 of the artificial graphite can be measured with a laser particle size analyzer (such as Malvern Master Size 3000) with reference to the standard GB/T 19077.1-2016.

In the context, the physical definitions of Dₙ10, Dᵥ10, Dᵥ50, and Dᵥ90 are as follows:
Dₙ10=the particle size when the cumulative number distribution percentage of the artificial graphite reaches 10%;
Dᵥ10=the particle size when the cumulative volume distribution percentage of the artificial graphite reaches 10%;
Dᵥ50=the particle size when the cumulative volume distribution percentage of the artificial graphite reaches 50%;
Dᵥ90=the particle size when the cumulative volume distribution percentage of the artificial graphite reaches 90%.

The morphology of the artificial graphite can be tested using a method known in the art. For example, the artificial graphite is stuck on the conductive glue, and the morphology of the particles is tested using a scanning electron microscope & energy spectrometer (such as sigma300). The test can refer to JY/T010-1996. The number of secondary particles and the total number of particles can be counted under 500 times magnification. The proportion of secondary particles by number is the ratio of the number of secondary particles to the total number of the particles.

The specific surface area of the artificial graphite can be measured using a method known in the art. For example, according to GB/T 19587-2017 (Determination of the specific surface area of solids by gas adsorption using the BET method), analysis of the specific surface area by the nitrogen adsorption can be used, and the specific surface area can be calculated by the BET (Brunauer Emmett Teller) method, in which the analysis of the specific surface area by the nitrogen adsorption can be carried out by a specific surface and pore size distribution analyzer (Type: Tri Star II 3020) from Micromeritics, USA.

In the OI value test of the negative electrode plate, X-ray diffraction analysis can refer to the standard JISK 0131-1996, using an X-ray diffractometer (such as Bruker D8 Discover X-ray diffractometer) for testing. For the X-ray diffraction analysis, a copper target can be used as the anode target, while a 0.02 mm-thick Ni filter sheet is used to filter out CuKp so as to use CuK_{α} rays as the radiation source with the ray wavelength λ=1.5418Å (a weighted average of K_{α1} and K_{α2}), the scanning angle range for 2θ is from 20° to 80°, and the scanning rate is 4°/min. In the present application, specifically, the method for testing the OI value of the negative electrode plate is as follows: the prepared negative electrode plate was directly placed in an X-ray diffractometer to the peak area C₀₀₄ of the (004) crystal plane diffraction peak and the peak area C₁₁₀ of the (110) crystal plane diffraction peak of the negative active material in the electrode plate by X-ray diffraction analysis, and the ratio of C₀₀₄/C₁₁₀ is determined as the OI value of the negative electrode plate.

The 2θ angle corresponding to the 004 crystal plane of the artificial graphite is from 53.5° to 55.5° (for example, 54.5°); the 2θ angle corresponding to the 110 crystal plane of artificial graphite is from 76.5° to 78.5° (for example, 77.4°).

The tap density of the artificial graphite can be measured using a method known in the art. For example, refer to the standard GB/T 5162-2006 and use a powder tap density tester (such as Bettersize BT-301, Dandong, China) to test.

The powder compaction density of the artificial graphite can be tested by a method known in the art. For example, refer to GB/T 24533-2009 and use an electronic pressure testing machine (such as UTM7305) to test: put a certain amount of powder on a special compaction mold, set different pressures, and read the thickness of the powder under different pressures on the equipment, and calculate the compaction density under different pressures.

The graphitization degree of the artificial graphite can be measured with a well-known method in the art. For example, the graphitization degree of the artificial graphite can be measured using an X-ray diffractometer (Bruker D8 Discover). The test can refer to JIS K 0131-1996, JB/T 4220-2011: measuring the size of d₀₀₂, and then calculating the graphitization degree according to the formula G=(0.344-d₀₀₂)/(0.344-0.3354), in which d₀₀₂ is the interlayer spacing in the artificial graphite crystal structure, in nm.

### [Positive electrode plate]

The positive electrode plate comprises a positive electrode current collector and a positive electrode film which is disposed on at least one surface of the positive electrode current collector and comprises a positive active material. As an example, the positive electrode current collector has two opposite surfaces in its own thickness direction, and the positive electrode film is laminated on either or both of the two opposite surfaces of the positive electrode current collector.

The positive electrode current collector can be made of materials with good electrical conductivity and mechanical strength. In some embodiments, the positive electrode current collector may be an aluminum foil.

The present application does not specifically limit the specific types of positive active materials, and materials known in the art for the positive electrode of secondary battery can be used, and those skilled in the art can make selections according to actual needs.

In some embodiments, the secondary battery can be a lithium-ion secondary battery. The positive active material may be selected from lithium transition metal oxides and modified materials thereof, and the modified material may be lithium transition metal oxide subjected to doping modification and/or coating modification. For example, the lithium transition metal oxide can be one or more selected from lithium cobalt oxide, lithium nickel oxide, lithium manganese oxide, lithium nickel manganese oxide, lithium nickel cobalt manganese oxide, lithium nickel cobalt aluminum oxide and lithium containing phosphate with olivine structure.

For example, the positive active material of the secondary battery can be one or more selected from LiCoO₂, LiNiO₂, LiMnO₂, LiMn₂O₄, LiNi_{1/3}Co_{1/3}Mn_{1/3}O₂(NCM333), LiNi_{0.5}Co_{0.2}Mn_{0.3}O₂ (NCM523), LiNi_{0.6}Co_{0.2}Mn_{0.2}O₂ (NCM622), LiNi_{0.8}Co_{0.1}Mn_{0.1}O₂ (NCM811), LiNi_{0.85}Co_{0.15}Al_{0.05}O₂, LiFePO₄(LFP) and LiMnPO₄.

In some embodiments, the positive electrode film optionally further comprises a binder. The types of the binder are not specifically limited, and those skilled in the art can make selections according to actual needs. For example, the binder used for the positive electrode film may comprise one or more of polyvinylidene fluoride (PVDF) and polytetrafluoroethylene (PTFE).

In some embodiments, the positive electrode film optionally further comprises a conductive agent. The types of the conductive agent are not specifically limited, and those skilled in the art can make selections according to actual needs. For example, the conductive agent used for the positive electrode film may comprise one or more of graphite, superconducting carbon, acetylene black, carbon black, Ketjen black, carbon dots, carbon nanotubes, graphene, and carbon nanofibers.

### [Electrolyte]

The electrolyte conducts ions between the positive electrode plate and the negative electrode plate. There is no specific limitation on the type of electrolyte in the present application, and it can be selected according to the requirement. For example, the electrolyte may be selected from at least one of solid electrolyte and liquid electrolyte (i.e., electrolytic solution).

In some embodiments, an electrolytic solution is used as the electrolyte. The electrolytic solution comprises an electrolyte salt and a solvent.

In some embodiments, the electrolyte salt may be one or more selected from LiPF₆ (lithium hexafluorophosphate), LiBF4 (lithium tetrafluoroborate), LiClO₄ (lithium perchlorate), LiAsF6 (lithium hexafluoroarsenate), LiFSI (lithium bisfluorosulfonimide), LiTFSI (lithium bistrifluoromethanesulfonimide), LiTFS (lithium trifluoromethanesulfonate), LiDFOB (lithium difluorooxalate borate), LiBOB (lithium dioxalate borate), LiPO₂F₂ (lithium difluorophosphate), LiDFOP (lithium difluorooxalatophosphate), and LiTFOP (lithium tetrafluorooxalate phosphate).

In some embodiments, the solvent may be one or more selected from ethylene carbonate (EC), propylene carbonate (PC), ethyl methyl carbonate (EMC), diethyl carbonate (DEC), dimethyl carbonate (DMC), dipropyl carbonate (DPC), methyl propyl carbonate (MPC), ethyl propyl carbonate (EPC), butylene carbonate (BC), fluoroethylene carbonate (FEC), methyl formate (MF), methyl acetate (MA), ethyl acetate (EA), propyl acetate (PA), methyl propionate (MP), ethyl propionate (EP), propyl propionate (PP), methyl butyrate (MB), ethyl butyrate (EB), 1,4-butyrolactone (GBL), sulfolane (SF), dimethylsulfone (MSM), methylethylsulfone (EMS), and diethylsulfone (ESE).

In some embodiments, the electrolytic solution may optionally comprise an additive. For example, the additives may comprise negative electrode film-forming additives, positive electrode film-forming additives, and additives that can improve certain performance of the battery, such as additives that improve overcharge performance of the battery, additives that improve high-temperature performance of the battery, and those that improve low-temperature performance of the battery.

### [Separator]

In the secondary batteries that use an electrolytic solution, and some secondary batteries that use solid electrolytes, a separator is also included. The separator is located between the positive electrode plate and the negative electrode plate to play a role of isolation. The separator is not particularly limited, and any well-known porous structure separator having electrochemical stability and mechanical stability can be selected. In some embodiments, the separator can be made of one or more of glass fiber, non-woven fabric, polyethylene, polypropylene, and polyvinylidene fluoride. The separator can be a single-layer film or a multilayer film. When the separator is a multilayer film, the materials of each layer may be the same or different.

### [Outer packaging]

In some embodiments, the secondary battery may comprise an outer packaging which is used to encapsulate the positive electrode plate, the negative electrode plate and the electrolyte. As an example, the positive electrode plate, the negative electrode plate and the separator can be laminated or wound to form a battery core with a laminated structure or a battery core with a wound structure, then the battery core is encapsulated in an outer packaging; the electrolyte can be an electrolytic solution, which is used to infiltrate the battery core. The number of battery cores in the secondary battery can be one or more, which can be adjusted according to requirements.

In some embodiments, the outer packaging of the secondary battery may be a soft bag, such as a bag-type soft bag. The material of the soft bag can be plastic, such as one or more of polypropylene (PP), polybutylene terephthalate (PBT), and polybutylene succinate (PBS). The outer packaging of the secondary battery may also be a hard case, such as a hard plastic case, an aluminum case, or a steel case.

### [Preparation]

The preparation of the secondary battery may comprise the step of assembling the negative electrode plate, the positive electrode plate, and the electrolyte to form a secondary battery. In some embodiments, the positive electrode plate, the separator, and the negative electrode plate can be wound or laminated in order, so that the separator is located between the positive electrode plate and the negative electrode plate to play a role of isolation, as such to obtain a battery core; the battery core is placed in an outer packaging, and then an electrolyte is injected and sealed to obtain a secondary battery.

In some embodiments, the preparation of the secondary battery may further comprises the step of preparing a positive electrode plate. As an example, a positive active material, a conductive agent, and a binder can be dispersed in a solvent (such as N-methylpyrrolidone, NMP for short) to form a uniform positive electrode slurry; the positive electrode slurry is coated on a positive electrode current collector; after being dried, cold pressed and other processes, the positive electrode plate is obtained.

In some embodiments, the preparation of the secondary battery comprises the step of using any one or more of the artificial graphite of the present application to prepare a negative electrode plate.

In some embodiments, the step of using any one or more of the artificial graphite of the present application to prepare a negative electrode plate may comprise: dispersing the negative active material comprising any one or more of the artificial graphite of the present application, a binder, and an optional thickeners and a conductive agent in a solvent which can be deionized water to form a uniform negative electrode slurry; the negative electrode slurry is coated on the negative electrode current collector, and after the steps of drying and cold pressing, a negative electrode plate is obtained.

Next, the present application also provides a method for preparing the artificial graphite, by which any artificial graphite of the present application can be prepared.

The method for preparing artificial graphite provided by the embodiment of the application includes the following steps:
S10: crushing green coke materials and classifying them;
S20: shaping the product obtained in step S10 and then removing fine powder;
S30: granulating the product obtained in step S20, wherein a binder is added during the granulation process in an amount not exceeding 5% of the total weight of the green coke materials;
S40: subjecting the product obtained in step S30 to a graphitization treatment at a temperature between 2800°C and 3200°C to obtain the artificial graphite.

Regarding the above preparation method, in step S10, the green coke material may be selected from one or more of green petroleum coke, green pitch coke and metallurgical coke, and preferably comprises green petroleum coke.

Preferably, the green coke material is non-needle coke. Preferably, the non-needle coke may be selected from one or more of non-needle green petroleum coke and non-needle green pitch coke; more preferably, the non-needle coke comprises non-needle green petroleum coke.

In some embodiments, in step S10, preferably, the content of volatile component in the green coke material is from 6% to 12% (weight percentage). For example, the content of volatile component in the green coke material can be 6% or more, 6.5% or more, 7% or more, or 7.5% or more; and can be 12% or less, 11% or less, 10% or less, or 9% or less. Preferably, the content of volatile component in the green coke material is from 7% to 10%.

The volatile content of the green coke is appropriate, which can make it have higher self-adhesion in the granulation process of step S20, improve the bonding strength between the primary particles in the artificial graphite, and make the artificial graphite have a higher structural strength. At the same time, the green coke raw material is also conducive to forming a dense internal structure of artificial graphite, and further improving the structural strength of artificial graphite.

The content of volatile component in the green coke can be tested using a method known in the art. For example, refer to SH/T 0026-1990.

In some embodiments, the content of sulfur in the green coke material may be ≤2%, ≤1.5%, ≤1%, or ≤0.5%. The green coke material has a low content of sulfur, which can reduce the probability that the specific surface area of artificial graphite will increase due to the escape of more sulfur components in the subsequent process. This is beneficial to making the specific surface area of artificial graphite meet the aforementioned requirements. Preferably, the sulfur content of the green coke is ≤0.6%.

The sulfur content of green coke can be tested by a method known in the art, for example, with reference to GB/T 2286-2008.

In some embodiments, in step S10, equipment and method known in the art can be used to crush the green coke material, such as jet mill, mechanical mill or roller mill. The crushing process often produces a lot of too small particles, sometimes there are too large particles, so after crushing, it can be classified according to the requirements to remove the too small particles and the too large particles in the powder after crushing. After the classification treatment, a granular product with a better particle size distribution can be obtained, which is convenient for the subsequent shaping and granulation process. The classification treatment can be carried out by using equipment and method known in the art, such as a classification screen, a gravity classifier, a centrifugal classifier, and the like.

By adjusting the particle size distribution of the granular product obtained in step S10, such as Dᵥ10, Dᵥ50 and/or Dᵥ90 within an appropriate range, the degree of granulation in the subsequent granulation step can be improved, and the artificial graphite itself can have a higher degree of isotropy and also have a higher gram capacity.

In step S20, the edges and corners of the granular product obtained in step S10 are polished by shaping. This facilitates the subsequent granulation process and makes the secondary particles of the obtained artificial graphite have higher structural stability.

In some embodiments, in step S20, equipment and method known in the art may be used to perform shaping treatment on the granular product obtained in step S10, such as a shaping machine or other shaping equipment.

The inventors have found that through the fine powder removal treatment in step S20, the Dₙ10 of the shaped particle product can be controlled in an appropriate range, so that the Dₙ10 of the obtained artificial graphite is within the required range. In some embodiments, in step S20 the Dₙ10 of the obtained particles is controlled to be at least 0.5µm, for example, from 0.5µm to 1.5µm.

Equipment and method known in the art can be used to remove fine powder, such as a grading screen, a gravity classifier, a centrifugal classifier, and the like.

In step S30, the granular product obtained in step S20 is granulated, so that the independently dispersed primary particles are aggregated to form secondary particles, which can significantly increase the isotropy of artificial graphite, thereby reducing the OI value of the negative electrode plate. The amount of binder added during the granulation process does not exceed 5% of the total weight of the green coke material (i.e. the amount of the binder is less than or equal to 5% of the total weight of the green coke material); preferably, the granulation process is performed without adding a binder (i.e. the amount of the binder is 0% of the total weight of the green coke material). For example, when the volatile content of the green coke material is 7% or more, step S30 of granulating the granular product obtained in step S20 can be carried out without adding a binder.

Granulation with a reduced amount of or no binder can further increase the gram capacity of artificial graphite. In particular, using the self-adhesive properties of the green coke for granulation with a reduced amount of or no binder can increase the overall structural strength of the artificial graphite particles, thereby further reducing the cyclic expansion of the battery. However, the content of volatile matter should not be excessively large, otherwise it will reduce the gram capacity of the negative active material and affect its processing performance during subsequent use.

In some embodiments, in step S30, equipment known in the art may be used for granulation, such as a granulator. The granulator usually includes a stirred reactor and a module for controlling temperature in the reactor. By adjusting the stirring speed, heating rate, granulation temperature, cooling rate, etc. in the granulation process, it is beneficial to improving the structural strength and isotropy of the obtained artificial graphite, so that the C₀₀₄/C₁₁₀ of the artificial graphite can meet the requirement.

Furthermore, by adjusting the above process conditions, the volume average particle size Dᵥ50 of the granulated product can be within the required range, in particular the Dᵥ10, Dᵥ50, and Dᵥ90 of the granulated product can all be within the required range.

By adjusting the particle size distribution of step S10 and/or S30, the Dᵥ50, Dᵥ10, Dᵥ90 and/or (Dᵥ90-Dᵥ10)/Dᵥ50 of the artificial graphite finally prepared can be within the required range.

In step S40, the granulated product obtained in step S30 is graphitized under ultra-high temperature conditions to obtain an artificial graphite with a suitable graphitization degree. In some embodiments, the temperature for graphitization in step S40 may be from 2800°C to 3200°C, preferably from 2900°C to 3100°C. The artificial graphite prepared at an appropriate graphitization temperature can obtain an appropriate degree of graphitization, so that the artificial graphite can obtain higher structural stability and gram capacity.

In step S30, graphitization can be performed using equipment known in the art, such as a graphitization furnace, and further, for example, an Acheson graphitization furnace. After the graphitization process is completed, a small amount of oversized particles formed by agglomeration of the granulated product during the high-temperature graphitization process can be removed by sieving. This can prevent oversized particles from affecting material processing properties, such as stability and coating properties of the slurry.

In some embodiments, step S50 may be further included after step S40: mixing the artificial graphite obtained in step S40 with an organic carbon source, and then heat-treating at a temperature of 850°C to 1250°C to obtain artificial graphite having an amorphous carbon coating layer. The organic carbon source can be selected from one or more of phenolic resin, asphalt, furfural resin, and epoxy resin, preferably asphalt.

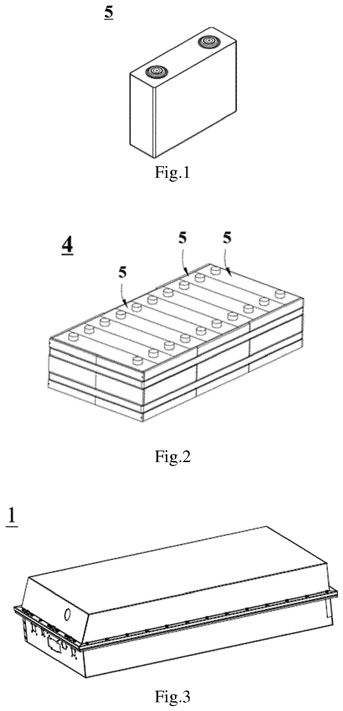

The present application does not particularly limit the shape of the secondary battery, which can be cylindrical, square or other arbitrary shapes. Fig. 1 shows a secondary battery 5 with a square structure as an example.

In some embodiments, the secondary battery can be assembled into a battery module, and the number of secondary batteries contained in the battery module can be multiple, and the specific number can be adjusted according to the application and capacity of the battery module.

Fig. 2 shows a battery module 4 as an example. Referring to Fig. 2, in the battery module 4, a plurality of secondary batteries 5 may be disposed sequentially in the length direction of the battery module 4. Of course, the secondary batteries 5 may also be disposed in any other manner. Furthermore, the plurality of secondary batteries 5 may be fixed by fasteners.

Optionally, the battery module 4 may further comprise a housing with a receiving space, and the plurality of secondary batteries 5 are received in the receiving space.

In some embodiments, the above-mentioned battery module may also be assembled into a battery pack, and the number of battery modules contained in the battery pack can be adjusted according to the application and capacity of the battery pack.

Figs. 3 and 4 show a battery pack 1 as an example. Referring to Figs. 3 and 4, the battery pack 1 may comprise a battery case and a plurality of battery modules 4 disposed in the battery case. The battery case comprises an upper case body 2 and a lower case body 3. The upper case body 2 can cover the lower case body 3 to form a closed space for receiving the battery modules 4. A plurality of battery modules 4 can be disposed in the battery case in any manner.

### [Apparatus]

The second aspect of the present application provides an apparatus, comprising the secondary battery according to the first aspect of the present application, and the secondary battery provides power to the apparatus. The apparatus may be, but is not limited to, a mobile device (e.g., a mobile phone, a laptop computer, etc.), an electric vehicle (e.g., a pure electric vehicle, a hybrid electric vehicle, a plug-in hybrid electric vehicle, an electric bicycle, an electric scooter, an electric golf vehicle, an electric truck), an electric train, a ship, a satellite, an energy storage system, etc.

The apparatus may comprise the secondary battery, the battery module or the battery pack selected according to its usage requirements.

Fig. 5 shows an apparatus as an example. The apparatus is a pure electric vehicle, a hybrid electric vehicle, or a plug-in hybrid electric vehicle. In order to meet the requirements of the apparatus for high power and high energy density of secondary batteries, the battery pack or battery module can be used.

As another example, the apparatus may be a mobile phone, a tablet computer, a notebook computer, etc. The apparatus is generally required to be thin and light, and the secondary battery can be used as a power supply.

### Examples

In order to describe the technical contents, structural features, achieved objectives and effects of the technical solutions in detail, the following detailed descriptions will be given in conjunction with specific embodiments. It should be understood that these embodiments are only used for explaining the present application, rather than limiting the scope of the present application. Unless otherwise stated, all parts, percentages, and ratios described in the following embodiments are based on weight, all reagents used in the embodiments are commercially available or synthesized according to conventional methods and can be directly used without further treatment, and all instruments used in the embodiments are commercially available.

### Test section

### (1) Cyclic expansion rate of negative electrode plate

The thickness of the negative electrode plate after cold pressing was recorded as Ho. The cold-pressed negative electrode plate, positive electrode plate, separator, and electrolytic solution were made into a secondary battery. At 25°C, the secondary battery was subjected to a 100% DOD (100% depth of discharge, that is to say, fully charged and then fully discharged) 1C/1C cycle in the NEW ARE charge and discharge machine. The discharge capacity of the first cycle (i.e. the initial capacity) was recorded as 100%. When the cycle capacity retention rate was 80% of the initial capacity, the cycling was stopped. Then the secondary battery was charged to 100% SOC (State of Charge), and disassembled, and then the thickness of the corresponding negative electrode plate was measured and denoted as H₁. The cyclic expansion rate of the negative electrode plate was: (H₁/H₀-1)×100%.

### (2) Gram capacity of the material

The prepared artificial graphite, Super P as a conductive agent, and PVDF as a binder were mixed uniformly at a mass ratio of 91.6:1.8:6.6 in NMP (N-methylpyrrolidone) as a solvent to form a slurry; the slurry was coated on a copper foil as the current collector and dried in an oven for later use. A lithium metal sheet was used as the counter electrode; polyethylene (PE) film was used as the separator; and ethylene carbonate (EC), ethyl methyl carbonate (EMC), and diethyl carbonate (DEC) were mixed at a volume ratio of 1:1:1, and then LiPF6 was uniformly dissolve in the thus-obtained solvent to obtain an electrolytic solution, in which the concentration of LiPF6 was 1 mol/L; the aforesaid components were assembled into CR2430-typde button battery in a glove box under protection of argon gas.

After standing for 12 hours, the button battery was discharged at a constant current of 0.05C to 0.005V and kept standing for 10 minutes; then it was discharged at a constant current of 50µA to 0.005V and kept standing for 10 minutes, then was discharged at a constant current of 10µA current to 0.005V; finally the battery was charged at a constant current of 0.1C to 2V, and the charge capacity was recorded then. The ratio of the charge capacity to the mass of the artificial graphite was determined as the gram capacity of the prepared artificial graphite.

### (3) Energy density test of secondary battery

At 25°C, the secondary batteries prepared in the Examples and Comparative examples were subjected to charge and discharge test at 1/3C-1/3C (the testing instrument can be a NEW ARE tester), and the voltage range was from 2.8V to 4.3V. The energy released by the battery in the first cycle was recorded and divided by the weight of the battery to get the weight energy density of the battery, in Wh/kg.

### (4) Kinetic performance of the battery

At 25°C, the batteries prepared in the Examples and Comparative examples were fully charged at x C and then fully discharged at 1 C for 10 times, and finally fully charged at x C; afterwards the negative electrode plates were taken out to observe lithium plating on the surface of the electrode plate was observed. If no lithium was plated on the surface of the negative electrode, the battery was tested with an increments of 0.1C to the charge rate x C until lithium was plated on the surface of the negative electrode, and then the test was stopped. The charge rate (x-0.1) C at this time was the maximum charge rate of the battery.

### Example 1

### Preparation of artificial graphite

1) Crushing the raw material: the raw material (non-needle green petroleum coke) was crushed by using a mechanical mill or roller mill. The non-needle green petroleum coke had a volatile content of 12% and a sulfur content of 0.4%. After crushing, classification treatment was carried out to control the particle size distribution of the obtained granular product.
2) Shaping and removing the fine powder: shaping the granular product obtained after crushing and removing the fine powder.
3) Granulating: the granular product obtained after shaping was put into the reactor of the granulator, and the green coke material was granulated without adding a binder.
4) Graphitization: the granulated product was added into a graphitization furnace, and heated up to 3000°C for ultra-high temperature graphitization to obtain artificial graphite.

### Preparation of negative electrode plate

The artificial graphite prepared above, a conductive agent (Super P), a binder (SBR), and a thickener (CMC-Na) were fully stirred and mixed at a mass ratio of 96.2:0.8:1.8:1.2 in an appropriate amount of deionized water to form a uniform negative electrode slurry; the negative electrode slurry was coated on the surface of the negative electrode current collector copper foil, dried and cold pressed to obtain a negative electrode plate. The compaction density of the negative electrode plate was 1.65 g/cm³, and the areal density was 10.7 mg/cm².

### Preparation of positive electrode plate

The positive active material (LiNi_{0.5}Co_{0.2}Mn_{0.3}O₂) (NCM523), the conductive agent (Super P), and the binder (PVDF) were fully stirred and mixed at a weight ratio of 96.2:2.7:1.1 in an appropriate amount of NMP to form a uniform positive electrode slurry; the positive electrode slurry was coated on the surface of the positive electrode current collector aluminum foil, dried and cold pressed to obtain a positive electrode plate. The compaction density of the positive electrode plate was 3.45 g/cm³, and the areal density was 18.8 mg/cm².

### Preparation of electrolyte

Ethylene carbonate (EC), ethyl methyl carbonate (EMC), and diethyl carbonate (DEC) were mixed at a volume ratio of 1:1:1, and then LiPF6 was uniformly dissolved in the above solution to obtain an electrolyte, in which the concentration of LiPF6 was 1mol/L.

### Separator

Polyethylene (PE) film was used as a separator.

### Preparation of secondary battery

The positive electrode plate, the separator, and the negative electrode plate were stacked in order, and a battery core was obtained after winding; then the battery core was put into the outer packaging, and the above-mentioned electrolyte was added, and after encapsulation, standing, formation, and aging, a secondary battery was obtained. The outer packaging was a hard case with length ^{∗} width ^{∗} height = 148mm^{∗}28.5mm^{∗}97.5mm.

### Examples 2-16

The preparation steps of Examples 2-5 were similar to Example 1 with the exception that the volatile content and sulfur content of the green coke materials were adjusted.

The preparation steps of Examples 6-11 were similar to Example 1 with the exception that the levels of fine powder removal after shaping were adjusted.

The preparation steps of Examples 12-16 were similar to Example 1 with the exception that the graphitization temperature was adjusted.

### Comparative Examples 1-4

The preparation steps of Comparative Examples 1-4 were similar to Example 1 with the exception that the preparation parameters of the artificial graphite were adjusted to obtain different artificial graphite. Specifically:

The raw materials used in Comparative Examples 1 and 4 were calcined needle-liked petroleum coke (i.e., calcined needle petroleum coke), and the binder asphalt was added in the granulation step 3), wherein the amount of asphalt was present in an amount of 8%, based on the total weight of the raw materials.

Comparative Example 2 did not comprise the step of removing fine powder after granulation.

Comparative Examples 3 and 4 adjusted the graphitization temperature.

**Table 1: Preparation parameters of the artificial graphite in Examples 1-16 and Comparative Examples 1-4**

| | Types of raw materials | Volatile content [wt%] | Sulfur content [wt%] | Graphitization temperature [°C] |
|---|---|---|---|---|
| Example 1 | Non-needle green petroleum coke | 12.0 | 0.4 | 3000 |
| Example 2 | Non-needle green petroleum coke | 11.0 | 0.4 | 3100 |
| Example 3 | Non-needle green petroleum coke | 9.8 | 0.5 | 3100 |
| Example 4 | Non-needle green petroleum coke | 8.5 | 1.5 | 3100 |
| Example 5 | Non-needle green petroleum coke | 8.4 | 1.1 | 3100 |
| Example 6 | Non-needle green petroleum coke | 9.8 | 0.5 | 3100 |
| Example 7 | Non-needle green petroleum coke | 9.8 | 0.5 | 3100 |
| Example 8 | Non-needle green petroleum coke | 9.8 | 0.5 | 3100 |
| Example 9 | Non-needle green petroleum coke | 9.8 | 0.5 | 3100 |
| Example 10 | Non-needle green petroleum coke | 9.8 | 0.5 | 3100 |
| Example 11 | Non-needle green petroleum coke | 9.8 | 0.5 | 3100 |
| Example 12 | Non-needle green | 9.8 | 0.5 | 2800 |
| | petroleum coke | | | |
| Example 13 | Non-needle green petroleum coke | 9.8 | 0.5 | 2900 |
| Example 14 | Non-needle green petroleum coke | 9.8 | 0.5 | 3000 |
| Example 15 | Non-needle green petroleum coke | 9.8 | 0.5 | 3100 |
| Example 16 | Non-needle green petroleum coke | 9.8 | 0.5 | 3200 |
| Comparative Example 1 | calcined needle-liked petroleum coke | 6.0 | 0.5 | 2800 |
| Comparative Example 2 | Non-needle green petroleum coke | 9.8 | 0.5 | 3100 |
| Comparative Example 3 | Non-needle green petroleum coke | 9.8 | 0.5 | 2700 |
| Comparative Example 4 | calcined needle-liked petroleum coke | 3.4 | 0.3 | 3200 |

**Table 2: Test results (parameters) of Examples 1-16 and Comparative Examples 1-4**

| | OI | Dₙ10 [µm] | Graphitiza tion degree [%] | SSA [m²/g] | Dᵥ50 [µm] | Dᵥ10 [µm] | Particle size span |
|---|---|---|---|---|---|---|---|
| Example 1 | 8.3 | 1.9 | 92.0 | 1.02 | 18.0 | 9.5 | 1.36 |
| Example 2 | 9.5 | 1.6 | 92.2 | 0.98 | 17.5 | 8.9 | 1.32 |
| Example 3 | 11.2 | 1.45 | 92.3 | 1.11 | 16.8 | 7.8 | 1.35 |
| Example 4 | 12.3 | 1.4 | 92.3 | 1.15 | 16.2 | 7.5 | 1.39 |
| Example 5 | 15.0 | 1.2 | 92.2 | 1.20 | 15.8 | 7.2 | 1.41 |
| Example 6 | 10.1 | 1.0 | 92.5 | 1.20 | 15.5 | 6.5 | 1.35 |
| Example 7 | 10.2 | 1.3 | 92.4 | 1.12 | 16.2 | 7.2 | 1.37 |
| Example 8 | 10.5 | 1.5 | 92.1 | 1.10 | 16.6 | 7.5 | 1.37 |
| Example 9 | 10.7 | 1.8 | 92.7 | 1.05 | 17.1 | 7.8 | 1.35 |
| Example 10 | 10.7 | 2.0 | 92.4 | 1.01 | 17.6 | 7.8 | 1.36 |
| Example 11 | 10.8 | 2.5 | 92.8 | 0.98 | 18.0 | 7.9 | 1.34 |
| Example 12 | 11.2 | 1.3 | 91.1 | 1.11 | 16.8 | 7.8 | 1.35 |
| Example 13 | 11.2 | 1.3 | 92.0 | 1.11 | 16.8 | 7.8 | 1.35 |
| Example 14 | 11.2 | 1.3 | 92.6 | 1.11 | 16.8 | 7.8 | 1.35 |
| Example 15 | 11.2 | 1.3 | 93.4 | 1.11 | 16.8 | 7.8 | 1.35 |
| Example 16 | 11.2 | 1.3 | 94.7 | 1.11 | 16.8 | 7.8 | 1.35 |
| Comparative Example 1 | 22.4 | 1.4 | 92.6 | 1.30 | 14.3 | 6.0 | 1.69 |
| Comparative Example 2 | 10.9 | 0.8 | 92.3 | 1.30 | 15.9 | 6.9 | 1.5 |
| Comparative Example 3 | 8.9 | 1.3 | 88.2 | 1.40 | 16.7 | 7.8 | 1.35 |
| Comparative Example 4 | 25.0 | 1.5 | 95.6 | 1.34 | 13.4 | 6.7 | 1.38 |

In Table 2 and the following table: Particle size span = (Dᵥ90 - Dᵥ10)/Dᵥ50.

Other parameters of the artificial graphite in Table 2: the I_{D}/I_{G} of the artificial graphite of Examples 1-16 and Comparative Examples 1-4 was from about 0.16 to about 0.18.

**Table 3: Test results (performance) of Examples 1-16 and Comparative Examples 1-4**

| | Cyclic expansion rate of electrode plate [%] | Gram capacity of artificial graphite [mAh/g] |
|---|---|---|
| Example 1 | 28.6 | 351.2 |
| Example 2 | 28.9 | 351.1 |
| Example 3 | 29.1 | 350.8 |
| Example 4 | 29.4 | 350.2 |
| Example 5 | 29.6 | 350.1 |
| Example 6 | 29.5 | 353.9 |
| Example 7 | 28.3 | 354.6 |
| Example 8 | 28.9 | 355.3 |
| Example 9 | 28.8 | 356.2 |
| Example 10 | 28.7 | 356.5 |
| Example 11 | 28.6 | 356.7 |
| Example 12 | 28.7 | 345.7 |
| Example 13 | 29.1 | 350.8 |
| Example 14 | 29.6 | 351.9 |
| Example 15 | 29.9 | 353.1 |
| Example 16 | 30.8 | 356.2 |
| Comparative Example 1 | 34.6 | 350.8 |
| Comparative Example 2 | 29.9 | 349.3 |
| Comparative Example 3 | 28.1 | 340.2 |
| Comparative Example 4 | 36.8 | 359.4 |

From the comparison of Examples 1-16 and Comparative Examples 1-4, it can be seen that, when the Dₙ10 and the graphitization degree of the artificial graphite were within an appropriate range and the compaction density of the negative electrode plate was from 1.55g/cm³ to 1.75g/cm³, the OI value of the artificial graphite was in the proper range, which can effectively reduce the cyclic expansion of the electrode plate and the battery, and the artificial graphite also had a higher gram capacity.

In Comparative Example 1, the orientation index OI value of artificial graphite was higher, which lead to a relatively large expansion rate of the negative electrode plate during the cycle.

In Comparative Example 2, the Dₙ10 of the artificial graphite was lower, and although the cyclic expansion of the electrode plate was relieved to a certain extent, the gram capacity of the artificial graphite itself was low.

In Comparative Example 3, the graphitization degree of the artificial graphite was lower. Although the cyclic expansion of the electrode plate was smaller, it is difficult for the artificial graphite to have a high gram capacity.

In Comparative Example 4, the graphitization degree and the orientation index OI value of the artificial graphite were not within the suitable range, although its own gram capacity was higher, the cyclic expansion of the electrode plate was larger.

### Examples 17-21 and Comparative Examples 5-6

The preparation steps of Examples 17-21 and Comparative Examples 5-6 were similar to Example 7 with the exception that the compaction density of the negative electrode plate was adjusted.

**Table 4: Test results (parameters) of Examples 17-21 and Comparative Examples 5~6**

| | Compa ction density of electro de plate [g/cm³] | OI | Dₙ10 [µm] | Graphitiza tion degree [%] | SSA [m²/ g] | Dᵥ50 [µm] | Dᵥ10 [µm] | Particl e size span |
|---|---|---|---|---|---|---|---|---|
| Example 17 | 1.55 | 9.1 | 1.3 | 92.4 | 1.12 | 16.2 | 7.2 | 1.37 |
| Example 18 | 1.62 | 10.0 | 1.3 | 92.4 | 1.12 | 16.2 | 7.2 | 1.37 |
| Example 19 | 1.68 | 10.7 | 1.3 | 92.4 | 1.12 | 16.2 | 7.2 | 1.37 |
| Example 20 | 1.7 | 11.3 | 1.3 | 92.4 | 1.12 | 16.2 | 7.2 | 1.37 |
| Example 21 | 1.75 | 11.8 | 1.3 | 92.4 | 1.12 | 16.2 | 7.2 | 1.37 |
| Comparati ve Example 5 | 1.5 | 7.9 | 1.3 | 92.4 | 1.12 | 16.2 | 7.2 | 1.37 |
| Comparati ve Example 6 | 1.8 | 12.7 | 1.3 | 92.4 | 1.12 | 16.2 | 7.2 | 1.37 |

**Table 5: Test results (performance) of Examples 17-21 and Comparative Examples 5~6**

| | Cyclic expansion rate of electrode plate [%] | energy density of secondary battery [Wh/kg] |
|---|---|---|
| Example 17 | 28.1 | 224.8 |
| Example 18 | 28.6 | 225.0 |
| Example 19 | 29.6 | 225.3 |
| Example 20 | 29.9 | 225.6 |
| Example 21 | 30.1 | 226.3 |
| Comparative Example 5 | 27.9 | 223.6 |
| Comparative Example 6 | 30.8 | 227.1 |

It can be concluded from Examples 17-21 that when the compaction density of the negative electrode plate was within the given range, the battery can simultaneously have lower cyclic expansion and higher energy density.

The negative electrode plate of Comparative Example 5 had a lower compaction density, and its corresponding battery energy density was lower.

The negative electrode plate of Comparative Example 6 had a higher compaction density, and the battery had a larger cyclic expansion.

### Examples 22-26

The preparation steps of Examples 22 to 26 were similar to Example 7 with the exception that the degree of crushing of the raw materials and the process parameters (such as equipment revolutions, heating curve, etc.) in the granulation process were adjusted to adjust the particle size of artificial graphite.

**Table 6: Test results (parameters) of Examples 22~26**

| | OI | Dₙ10 [µm] | SSA [m²/g] | Dᵥ50 [µm] | Dᵥ10 [µm] | Particle size span |
|---|---|---|---|---|---|---|
| Example 22 | 11.5 | 1.1 | 1.35 | 12.5 | 6.1 | 1.1 |
| Example 23 | 11.1 | 1.2 | 1.29 | 13.8 | 6.7 | 1.2 |
| Example 24 | 10.8 | 1.3 | 1.23 | 15.5 | 7.5 | 1.3 |
| Example 25 | 10.2 | 1.4 | 1.20 | 18.2 | 8.1 | 1.5 |
| Example 26 | 9.7 | 1.5 | 1.18 | 21.8 | 8.9 | 1.8 |

Other parameters of the artificial graphite: the graphitization degree of the artificial graphite of Examples 22-26 was from about 92% to about 93%; I_{D}/I_{G} was from about 0.16 to about 0.18.

**Table 7: Test results (performance) of Examples 22~26**

| | Cyclic expansion rate of electrode plate [%] | Gram capacity of artificial graphite [mAh/g] | Kinetic performance |
|---|---|---|---|
| Example 22 | 28.2 | 349.0 | 1.7C |
| Example 23 | 28.4 | 353.9 | 1.7C |
| Example 24 | 28.6 | 354.6 | 1.6C |
| Example 25 | 28.5 | 355.1 | 1.5C |
| Example 26 | 28.7 | 356.8 | 1.4C |

From the comparison of Examples 22-26 and Example 7, it can be seen that when the artificial graphite further had a particle size distribution in an appropriate range, it can improve the cyclic expansion of the electrode plate and the battery and increase the gram capacity of the artificial graphite, making the battery have better kinetic performance.

### Example 27

The preparation steps of Example 27 were similar to of Example 7 with the exception that after step (4) it further included step (5), i.e. mixing the artificial graphite obtained in step (4) with asphalt, and then heating it at a temperature of 1100°C to obtain artificial graphite with a coating layer.

**Table 8: Test results (parameters) of Example 27**

| | OI | Dₙ10 [µm] | Graphitization degree [%] | SSA [m²/g] | Dᵥ50 [µm] | Dᵥ10 [µm] | Particle size span | I_{d}/I_{g} |
|---|---|---|---|---|---|---|---|---|
| Example 27 | 10.7 | 2.3 | 92.4 | 1.01 | 16.9 | 7.9 | 1.25 | About 0.33 |

**Table 9: Test results (performance) of Example 27**

| | Cyclic expansion rate of electrode plate [%] | Gram capability of artificial graphite [mAh/g] | Kinetic performance |
|---|---|---|---|
| Example 27 | 30.9 | 352.1 | 1.8C |

From the results of Example 27 and Example 7, it can be seen that when the surface of the artificial graphite of the present application was further coated with amorphous carbon, the kinetic performance of the artificial graphite can be improved without substantively affecting the cyclic expansion of the electrode plate and the material gram capacity.

The above mentioned descriptions only show particular implementations of the present application and but are not intended to limit the protection scope of the present application. Any modification or replacement readily figured out by a person skilled in the art within the technical scope disclosed in the present application shall fall within the protection scope of the present application. Therefore, the protection scope of the present application shall be determined by the protection scope of the claims.

## Claims

1. A secondary battery comprising a negative electrode plate, the negative electrode plate comprising a negative active material, wherein the negative active material comprises an artificial graphite having a number particle size Dₙ10 of ≥ 1µm;
the artificial graphite has a graphitization degree of from 90% to 95%;
the negative electrode plate has a compaction density of from 1.55g/cm³ to 1.75g/cm³, and
the negative electrode plate has an OI value of ≤15, wherein the OI value of the negative electrode plate represents a ratio C₀₀₄/C₁₁₀, in which C₀₀₄ is the peak area of the diffraction peak of 004 crystal plane of the artificial graphite in the negative electrode plate and C₁₁₀ is the peak area of the diffraction peak of 110 crystal plane of the artificial graphite in the negative electrode plate.

2. The secondary battery according to claim 1, wherein the artificial graphite has a numerical particle size Dₙ10 of from 1.2µm to 3µm, preferably from 1.3µm to 2µm.

3. The secondary battery according to claim 1, wherein the artificial graphite has a graphitization degree of from 92% to 94%.

4. The secondary battery according to any one of claims 1 to 3, wherein the negative electrode plate has a compaction density of from 1.6 g/cm³ to 1.7 g/cm³; preferably from 1.62 g/cm³ to 1.68 g/cm3.

5. The secondary battery according to any one of claims 1 to 4, wherein the OI value of the negative electrode plate is from 8 to 12.

6. The secondary battery according to any one of claims 1 to 5, wherein the artificial graphite further satisfies one or more of the following (1) to (4):
(1) the artificial graphite has a volume particle size Dᵥ10 of ≥6µm, preferably 6.5µm≤Dᵥ10≤10.5µm;
(2) the artificial graphite has a volume average particle size Dᵥ50 of from 15µm to 22µm, preferably from 15µm to 18µm;
(3) the artificial graphite has a particle size span (Dᵥ90-Dᵥ10)/Dᵥ50 of from 1.1 to 1.8, preferably from 1.2 to 1.5;
(4) the artificial graphite has a specific surface area SSA of from 0.8m²/g to 2.0m²/g, preferably from 1.0m²/g to 1.5m²/g.

7. The secondary battery according to any one of claims 1 to 6, wherein the artificial graphite comprises secondary particles formed by agglomeration of primary particles; proportion of number of the secondary particles in the artificial graphite is at least 60 %, preferably from 70% to 90%.

8. The secondary battery according to any one of claims 1 to 7, wherein the artificial graphite has a D peak intensity I_{D} and a G peak intensity I_{G}, and the ratio I_{D}/I_{G} satisfies: I_{D}/I_{G} ≤0.25, preferably 0.1 ≤I_{D}/I_{G}≤0.2.

9. The secondary battery according to any one of claims 1 to 8, wherein
the artificial graphite has a tap density of from 0.85g/cm³ to 1.35g/cm³, preferably from 0.95g/cm³ to 1.15g/cm³; and/or,
the artificial graphite has a powder compaction density of from 1.65g/cm³ to 1.85g/cm³ under a pressure of 2000 kg, preferably from 1.68g/cm³ to 1.83g/cm³.

10. The secondary battery according to any one of claims 1 to 9, wherein the artificial graphite has a gram capacity of from 350 mAh/g to 359 mAh/g, preferably from 352 mAh/g to 355 mAh/g.

11. The secondary battery according to claim 1, wherein the negative electrode plate has an areal density of from 7.5 mg/cm² to 14.0 mg/cm², preferably from 9.5 mg/cm² to 12.0 mg/cm².

12. An apparatus comprising the secondary battery according to any one of claims 1 to 11.

13. An artificial graphite, wherein the artificial graphite has a numerical particle size Dₙ10 of at least 1µm; the artificial graphite has a graphitization degree of 90% to 95%; when the artificial graphite is used in a negative electrode with a compaction density of 1.55g/cm³ to 1.75g/cm3, the ratio of a peak area of the 004 crystal plane to a peak area of the 110 crystal plane is at most 15.

14. A method for preparing an artificial graphite, comprising the following steps:
(1) crushing green coke materials and classifying them;
(2) shaping the product obtained in step (1) and then removing fine powder;
(3) granulating the product obtained in step (2), wherein a binder is added during the granulation process in an amount of not exceeding 5% of the total weight of the green coke materials;
(4) subjecting the product obtained in step (3) to a graphitization treatment at a temperature of 2800°C ~ 3200°C to obtain the artificial graphite;
wherein the artificial graphite has a number particle size Dₙ10 of ≥ 1µm, and the artificial graphite has a graphitization degree of 90% to 95%; when the artificial graphite is used in a negative electrode having a compaction density of 1.55g/cm³ to 1.75g/cm³, the ratio of a peak area of the 004 crystal plane to a peak area of the 110 crystal plane of the artificial graphite is ≤15.

15. The method according to claim 14, wherein the green coke comprises one or more of green petroleum coke, green pitch coke and metallurgical coke; preferably, the green coke comprises green petroleum coke.

16. The method according to claim 14 or 15, wherein the green coke is non-needle coke.

17. The method according to any one of claims 14 to 16, wherein a content of volatile component in the green coke is from 6% to 12%, preferably from 7% to 10%; and/or,
a content of sulfur in the green coke is ≤2%, preferably ≤ 0.6%.

18. The method according to any one of claims 14 to 17, wherein in step (3), the product obtained in step (2) is granulated without adding a binder.

19. The method according to any one of claims 14 to 18, wherein the product obtained in step (3) is graphitized at a temperature of from 2900°C to 3100°C.

20. A method for preparing a secondary battery, comprising the step of preparing a negative electrode plate by using the artificial graphite according to claim 13.
